(19) Europäisches Patentamt
European Patent Office
Office européen des brevets

(11) Publication number : **0 531 008 A1**

(12) # EUROPEAN PATENT APPLICATION

(21) Application number : **92307517.0**

(22) Date of filing : **18.08.92**

(51) Int. Cl.$^5$ : **C08J 11/06,** // C08L67/02, C08L69/00

(30) Priority : **22.08.91 US 748596**

(43) Date of publication of application : **10.03.93 Bulletin 93/10**

(84) Designated Contracting States : **DE ES FR GB IT NL**

(71) Applicant : **GENERAL ELECTRIC COMPANY**
**1 River Road**
**Schenectady, NY 12345 (US)**

(72) Inventor : **Scobbo, James Joseph, Jr.**
**217 Foxwood Drive**
**Clifton Park, New York 12065 (US)**
Inventor : **Laughner, Michael Paul**
**10 Carriage Road**
**Clifton Park, New York 12065 (US)**
Inventor : **Dekkers, Marinus Emmanuel Johannes**
**118 Woodshire Drive**
**Parkersburg, West Virginia 26101 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Compositions derived from recycled polycarbonate and polyester.**

(57) Recycled compositions are prepared by melt blending a scrap plastic composition comprising at least one polycarbonate, at least one polyester, and at least one impact modifier with an epoxy functionalized copolymer derived from at least one unsaturated epoxy compound and at least one olefin.

EP 0 531 008 A1

This invention relates to recycled plastic resins, and more particularly it relates to compositions prepared by blending polycarbonates and polyesters.

Tens of thousands of automobiles are sold to consumers every year. Countless pounds of plastic in the form of automobile exteriors are being sold to consumers every day. This results in hundreds of millions of pounds of non biodegradable thermoplastic and some thermoset resin scrap that must be disposed of each year. For environmental reasons, it would be highly desirable to find additional uses for this large and ever growing amount of plastic waste, such as recycling the scrap resin into useful products. Often the discarded items are made from incompatible resins, for example, the bumper and front end of automobiles. For economic and environmental reasons, it would be desirable to find ways to process such incompatible scrap resins without sorting.

Therefore, the present invention provides a composition prepared from the incompatible plastic resin scrap capable of being molded into shaped articles which exhibit excellent mechanical properties.

In one of its aspects, the present invention provides a composition obtained by blending at 220-320°C, in percent by weight of the total composition :

a. 1 to 97% of at least one reclaimed polyester;

b. 97 to 1% of at least one reclaimed polycarbonate;

c. 1 to 40% of a reclaimed impact modifier; and

d. 1 to 40% of an epoxy functionalized olefin copolymer derived from at least one unsaturated epoxy compound and at least one olefin.

The present invention further provides a process for producing the above mentioned compositions by blending at 220°C - 320°C 99% to 60% based on the total weight of the composition of a scrap thermoplastic composition,comprising at least one polycarbonate, at least one polyester, and at least one impact modifier and 1% to 40% by weight of an epoxy functionalized olefin copolymer derived from at least one unsaturated epoxy and at least one olefin.

One group of linear polyesters useful in the composition of the present invention includes polyesters having structural units of formula I wherein

$$\text{(I)} \qquad -O-R^1-O-\overset{\overset{O}{\|}}{C}-R^2-\overset{\overset{O}{\|}}{C}-.$$

each $R^1$ is independently a divalent aliphatic, alicyclic or aromatic radical containing about 2-10 carbon atoms and each $R^2$ is independently a divalent aliphatic, alicyclic or aromatic radical containing about 2-10 and usually about 6-10 carbon atoms. Polyesters containing such units may be prepared by the known reactions of dihydroxy compounds with dicarboxylic acids or functional derivatives thereof such as anhydrides, acid chlorides or lower alkyl (especially methyl) esters, preferably the esters.

The $R^1$ radicals may be one or more alicyclic hydrocarbon radicals containing about 2-10 carbon atoms, alicyclic radicals being known to those skilled in the art to be equivalent to aliphatic radicals for the purposes of the invention. They are most often derived from aliphatic or alicyclic dihydroxy compounds such as ethylene glycol, 1,4-butanediol, propylene glycol, 1,3-propanediol, 1,6-hexanediol, 1,10-decanediol, 1,4-cyclohexanedimethanol and 2-butene-1,4-diol. Aromatic dihydroxy compounds, especially bisphenols such as 2,2-bis(4-hydroxyphenol)propane, bisphenol A, may also be employed. The $R^1$ radicals may also contain substituents which do not substantially alter the reactivity of the dihydroxy compound ( e.g., alkoxy, halo, nitrile) or hetero atoms (e.g., oxygen or sulfur). The aliphatic or alicyclic $R^1$ radicals are usually saturated.

The $R^2$ radicals may be derived from such acids as succinic, adipic, maleic, isophthalic and terephthalic acids or similar substituted and hetero atom-containing acids.

Also contemplated are polymers in which at least a portion of the $R^1$ and/or $R^2$ values are soft segment radicals such as poly(oxyethylene) or poly(oxybutylene). Such polymers may be prepared by incorporating compounds such as polyethylene glycol, or dicarboxylic acids containing polyoxyalkylene segments in the polymerization reaction, and are typically elastomeric. Illustrative polyesters of this type are available from DuPont and General Electric under the trade name HYTREL and LOMOD, respectively.

Preferably, $R^1$ and $R^2$ are hydrocarbon radicals, typically containing about 2-10 and preferably 2-6 carbon atoms. Most often, $R^1$ is aliphatic and $R^2$ is aromatic. The polymer is most desirably a poly(alkylene terephthalate), particularly polybutylene terephthalate or polyethylene terphthalate.

The polycarbonates used in this invention are well known in the art and generally comprise structural units of formula II

(II) $$-O-R^3-O-\overset{O}{\overset{\|}{C}}- ,$$

wherein each $R^3$ is independently a divalent aliphatic, alicyclic, or aromatic group; those which are aliphatic or alicyclic generally contain up to about 8 carbon atoms. Suitable $R^3$ values include ethylene, propylene, trimethylene, tetramethylene, hexamethylene, dodecamethylene, poly-1,4-(2-butenylene), poly-1,10-(2-ethyldecylene), 1,3-cyclopentylene, 1,3-cyclohexylene, 1,4-cyclohexylene, m-phenylene, p-phenylene, 4,4'-biphenylene, 2,2-bis(4-phenylene)propane, benzene-1,4-dimethylene (which is a vinylog of the ethylene radical and has similar properties) and similar radicals such as those which correspond to the dihydroxy compounds disclosed by name or formula (generic or specific) in U.S. Patent 4,217,438, incorporated herein by reference. Also included are radicals containing nonhydrocarbon moieties. These may be substituents such as chloro, nitro, alkoxy and the like, and also linking radicals such as thio, sulfoxy, sulfone, ester, amide, ether and carbonyl. Most often, however, all $R^3$ radicals are hydrocarbon radicals.

Preferably at least about 60% of the total number of $R^3$ values in the polycarbonate, and most desirably all of the $R^3$ values are aromatic. The aromatic $R^3$ radicals preferably have the formula

(III) $$-A-Y-A^1-$$

wherein each of A and $A^1$ is a monocyclic divalent aromatic radical and Y is a bridging radical in which one or two atoms separate A from $A^1$ . The free valence bonds in formula III are usually in the meta or para positions of A and $A^1$ in relation to Y.

In formula III, the A and $A^1$ values may be unsubstituted phenylene or substituted derivatives thereof, illustrative substituents (one or more) being alkyl, alkenyl (e.g., crosslinkable-graftable moieties such as vinyl and allyl), halo (especially chloro and/or bromo), nitro, alkoxy and the like. Unsubstituted phenylene radicals are preferred. Both A and $A^1$ are preferably p-phenylene, although both may be o- or m-phenylene or one o- or m-phenylene and the other p-phenylene.

The bridging radical, Y, is one in which one or two atoms, preferably one, separate A from $A^1$. It is most often a hydrocarbon radical and particularly a saturated radical such as methylene, cyclohexylmethylene, 2-[2,2,1]bicycloheptylmethylene, ethylene, 2,2-propylene, 1,1-(2,2dimethylpropylene), 1,1-cyclohexylene, 1,1-cyclopentadecylene, 1,1-cyclododecylene or 2,2-adamantylene, especially a gem-alkylene radical. Also included, however, are unsaturated radicals and radicals which are entirely or partially composed of atoms other than carbon and hydrogen. Examples of such radicals are 2,2-dichloroethylidene, carbonyl, oxy, thio and sulfone. For reasons of availability and particular suitability for the purposes of this invention, the preferred radical of formula III is the 2,2-bis (4-phenylene)propane radical, which is derived from bisphenol A and in which Y is isopropylidene and A and $A^1$ are each p-phenylene.

The impact modifier generally comprises a core shell polymer derived from a rubber core on which one or more shells have been grafted. The core suitably is an alkyl acrylate rubber or a butadiene rubber. One or more shells have been grafted on the core. The shells are preferably derived from a vinyl aromatic compound, a vinyl cyanide compound, an alkyl methacrylate (preferably methyl methacrylate) and/or methacrylic acid. The core as well as the shells may further be functionalized with compounds, such as glycidyl methacrylate and maleic anhydride, which may act as crosslinking or grafting agents. Suitable impact modifiers are commercially available as KM653 from Rohm and Haas Company.

The epoxy functionalized olefin copolymer derived from at least one unsaturated epoxy compound and at least one olefin, preferrably ethylene, is described in U.S. Patents 4,444,950, 4,454,284, 4,780,505, 4,461,871 as well as in European Patent 180,648 incorporated herein by reference. Suitable epoxy functional graft monomers are glycidyl ethers of unsaturated alcohols, e.g., allyl glycidyl ether, methallyl glycidyl ether; glycidyl ethers of alkenylphenols, e.g., isopropenylphenyl glycidyl ethers; vinyl and allyl esters of epoxy carboxylic acids, vinyl esters of epoxidized oleic acid; and the like. A preferable subgenus includes unsaturated epoxy compounds of the formula,

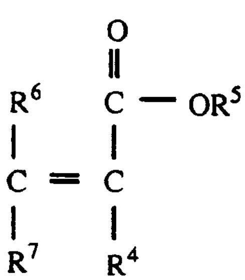

,

wherein $R^5$ is an organic group having an epoxide functionality, $R^4$ a monovalent radical selected from the class consisting of hydrogen, $C_{(1-8)}$ alkyl, a $C_{(6-13)}$ aromatic organic group, aralkyl, alicyclic and mixtures thereof, and $R^6$ and $R^7$ are preferably hydrogen but either may be a monovalent radical selected from the group consisting of hydrogen, $C_{(1-3)}$ alkyl, a $C_{(6-13)}$ aromatic organic group, aralkyl, alicyclic and mixtures thereof. Such epoxy compounds include glycidyl esters of unsaturated carboxylic acids; i,e., glycidyl 2-ethyl acrylate, glycidyl 2-propyl acrylate, glycidyl acrylate. Preferred as the graft monomer herein is glycidyl methacrylate (GMA). Also suitable for use in the present invention is a terpolymer derived from a vinyl ester, such as vinyl acetate, and the above described olefin and epoxy compounds. The composition of the present invention may optionally comprise up to about 40 percent by weight of filler material. Suitable filler material includes particulate or fibrous reinforcing agents, preferably glass fibers.

The above mentioned reactive conditions include melt blending operations which may be performed in conventional melt blending apparatus of both the batch and continuous type. It is often preferably conducted continuously in an extruder, by reason of the excellent properties of extruded material and the availability of extruders in commercial polymer processing facilities. Typical conditions include temperatures in the range of about 220-320°C.

In order that those skilled in the art may be better able to practice the present invention, the following examples are given as illustrations of the superior mechanical characteristics of the present invention. It should be noted that the invention is not limited to the specific details embodied in the Examples and further that all parts are by weight.

Control

A reclaimed pelletized dry mixture of 5 parts polycarbonate, 3 parts polybutylene terephthalate, and 2 parts bisphenol A polycarbonate/polybutylene terephthalate/KM653 blend (45 parts biphenol A polycarbonate, 40 parts polybutylene terephthalate, and 15 parts KM653) (hereinafter reclaimed pellets) was compounded on a Welding Engineers 20mm twin screw extruder at 475°F. The blend was pelletized and dried for 3-4 hours at 85°C. The blend was subsequently injection molded at 475°F into ASTM parts for mechanical testing.

Example 1

The procedure of the Control,was followed except that the reclaimed pellets were dry blended with a polyethylene glycidyl methacrylate copolymer, derived from 88 parts polyethylene and 12 parts GMA, commercially available from Sumitomo Ltd. as Bondfast E (hereinafter BF-E). The ratio of reclaimed pellets to Bondfast E was 90 parts to 10 parts. Example 2

The procedure of Example 1 was followed except that the ratio of reclaimed pellets to Bondfast E was 80 parts to 20 parts.

Example 3

The procedure of Example 1 was followed!owed except that the reclaimed pellets were dry blended with a polyethylene gylcidyl methacrylate vinyl acetate terpolymer, derived from 83 parts polyethylene, 12 parts GMA, and 5 parts vinyl acetate, commercially available from Sumitomo Ltd. as Bondfast 2B (hereinafter BF-2B).

Example 4

The procedure of Example 2 was followed except that Bondfast 2B was used.

Table 1

| BLEND | COMPOSITION PARTS BY WEIGHT | MODULUS (ksi) | MAX STRAIN AT BREAK (%) | NOTCHED IZOD (ft-lb/in) |
|---|---|---|---|---|
| Control | Recycle 100 | 627 | 14 | 1.6 |
| Example 1 | Recycle/BF-E,90/10 | 471 | 23 | 6.1 |
| Example 2 | Recycle/BF-E,80/20 | 402 | 29 | 7.2 |
| Example 3 | Recycle/BF-2B,90/10 | 449 | 23 | 5.9 |
| Example 4 | Recycle/BF-2B,80/20 | 381 | 31 | 7.8 |

Table 1 illustrates the improved mechanical performance when the reclaimed pellets are blended with the polyethylene glycidyl methacrylate copolymer or the polyethylene glycidyl methacrylate vinyl acetate terpolymer.

Obviously, other modifications and variations of the present invention, are possible in light of the above teachings. It is therefore to be understood that changes may be made in particular embodiments of the invention described which are within the full intended scope of the invention as defined by the claims. It is to be understood further that all patents mentioned above are to be incorporated herein by reference.

## Claims

1. A process for producing a recycled resin by blending under reactive conditions:
   a. about 1 to about 97 parts by weight, based on the composition weight, of at least one reclaimed polyester;
   b. about 97 to about 1 part by weight, based on the composition weight, of at least one reclaimed polycarbonate;
   c. about 1 to about 40 parts by weight, based on the composition weight, of a reclaimed impact modifier;and
   d. about 1 to 40 about parts by weight of an epoxy functionalized olefin copolymer derived from at least one unsaturated epoxy compound and at least one olefin.

2. A process according to claim 1 wherein the polyester is polybutylene terephthalate or polyethylene terephthalate.

3. A process according to Claim 1 or Claim 2 wherein the reclaimed polycarbonate comprises structural units of the formula

$$-O-R^3-O-\overset{\displaystyle O}{\overset{\|}{C}}-.$$

4. A process according to claim 3 wherein at least 60% of the total number of $R^3$ radicals are aromatic and each $R^3$ radical has the formula $A-Y-A^1$ wherein each of A and $A^1$ is a monocyclic divalent aromatic radical and Y is a bridging radical in which one or two atoms separate A from $A^1$.

5. A process according to claim 4 wherein each of A and $A^1$ is p-phenylene and Y is isopropylidene.

6. A process according to any preceding claim wherein the impact modifier is a core-shell polymer comprising a rubber core onto which is grafted at least one shell comprising a vinyl aromatic compound, a vinyl cyanide compound, an alkyl methacrylate, a methacrylic acid or mixtures thereof.

7. A process according to claim 6 wherein the alkyl methacrylate is methyl methacrylate and the core is butadiene.

8. A process according to any preceding claim wherein the olefin is ethylene and the epoxy functionalized olefin copolymer is selected from a copolymer derived from ethylene and glycidyl methacrylate, and a terpolymer derived from ethylene, glycidyl methacrylate, and vinyl acetate.

European Patent Office

# EUROPEAN SEARCH REPORT

Application Number
EP 92 30 7517

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 175 220 (MOBAY CORPORATION)<br>* claim 9 *<br>* page 12, line 17 - line 26 *<br>* page 15, line 26 - page 16, line 9 *<br>--- | 1-8 | C08J11/06<br>// C08L67:02, C08L69:00 |
| P,X | WO-A-9 116 379 (THE DOW CHEMICAL COMPANY)<br>* claims 12,14 *<br>* page 4, line 1 - page 5, line 8 *<br>* page 8, line 30 - page 9, line 28 *<br>* page 15, line 3 - line 6 *<br>* page 18, line 7 - line 10 *<br>* page 30, line 30 - page 31, line 17 *<br>--- | 1-8 | |
| A | EP-A-0 322 095 (UNIROYAL CHEMICAL COMPANY)<br>* claim 7 *<br>* page 3, line 39 - line 43 *<br>--- | 1 | |
| A | EP-A-0 332 772 (E.I. DU PONT DE NEMOURS AND CO.)<br>* claims 1,4,10,14 *<br>----- | 1 | |

TECHNICAL FIELDS SEARCHED (Int. Cl.5 )

C08J
C08L

The present search report has been drawn up for all claims

| Place of search | Date of completion of the search | Examiner |
|---|---|---|
| THE HAGUE | 10 DECEMBER 1992 | NIAOUNAKIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)